# FASCICULE DE BREVET EUROPEEN

(11) **EP 1 684 888 B1**
(45) Date de publication et mention de la délivrance du brevet: **16.02.2011**
(21) Numéro de dépôt: 04805416.7
(22) Date de dépôt: 09.11.2004
(51) Int. Cl.: B01D 45/14, F01M 13/04

(54) **DISPOSITIF SEPARATEUR D'HUILE**
ÖLABSCHEIDER
OIL SEPARATING DEVICE

(30) Priorité: 12.11.2003 FR 0313218
(43) Date de publication de la demande: 02.08.2006
(73) Titulaire: MECAPLAST S.A.M., 98014 Monaco Cédex (MC)
(72) Inventeur: DEMANGEOT, Jérome, F-62350 BUSNES (FR); LENGAGNE, Bernard, F-62320 Acheville (FR); CEGLARSKI, Michel, F-62750 Loos En Gohelle (FR); BARRET, Ian, F-06000 Nice (FR)
(74) Mandataire: Hirsch & Associés
(86) Numéro de dépôt international: PCT/FR2004/002873
(87) Numéro de publication internationale: WO 2005/049176

(56) Documents cités:
- EP-A- 0 736 673
- GB-A- 185 425
- GB-A- 709 646
- US-A- 3 293 832
- US-A- 3 720 045
- US-A- 5 114 446

## Description

La présente invention concerne un dispositif séparateur d'huile, par exemple pour le déshuilage des gaz provenant d'un carter moteur.

Un dispositif séparateur d'huile peut être placé entre un carter moteur et un système d'admission des gaz du moteur, par exemple devant un cylindre de moteur à combustion interne d'un véhicule automobile.

Dans un moteur à combustion interne, les quatre temps du cycle thermodynamique - admission de gaz combustible et d'air, compression du mélange gazeux, détente due à l'explosion du mélange, échappement - se déroulent successivement dans une seule et même enceinte, dite chambre de combustion. Les gaz introduits dans cette chambre de combustion sont constitués d'une part d'air et d'autre part d'essence ou de gasoil, selon des proportions dosées de manière adéquate selon les moteurs et les systèmes d'allumage utilisés. Le mélange gazeux est alors enflammé dans la chambre de combustion.

Il est classique de réutiliser les fuites de gaz, dites « blow by » en anglais, en les aspirant du carter vers un collecteur d'admission de la chambre de combustion. Ces gaz sont cependant chargés de particules d'huile en suspension collectées dans le moteur.

Les véhicules actuels doivent répondrent à des normes antipollution de plus en plus drastiques. En particulier, l'air entrant dans la chambre de combustion doit être purifié d'éventuelles particules d'huile en suspension pour que la combustion soit la meilleure possible et la pollution la plus réduite possible.

Il est donc généralement nécessaire de déshuiler le flux gazeux entrant dans le collecteur d'admission d'une chambre de combustion. Pour ce faire, il existe des dispositifs séparateurs d'huile adaptés à décanter les particules d'huile d'un flux gazeux.

Le document DE 42 14 324 décrit un décanteur dit cyclone. Un tel dispositif présente une structure sensiblement cylindrique présentant une entrée d'air en partie latérales supérieure et une sortie d'air aspirée vers le haut. Un tel dispositif est basé sur la vitesse de déflexion de l'air par rapport aux particules d'huile qui sont séparées par centrifugation et gravitation. Pour atteindre un degré de décantation d'huile suffisant, il est nécessaire que le flux d'air chargé d'huile pénètre dans le cyclone avec une direction tangente à l'axe du cylindre du cyclone et avec une vitesse importante. Par ailleurs, il est nécessaire que l'axe du cyclone soit le plus vertical possible pour permettre une décantation optimale des particules d'huile par gravitation. Ce dispositif implique donc d'importantes contraintes d'agencement. De plus, lorsque le flux gazeux est important, le flux subit une forte perte de charge à l'entrée dans le cyclone, ce qui peut créer une mise en pression du moteur provoquant des fuites indésirables.

Pour améliorer l'efficacité du dispositif cyclone, il a été proposé dans le document US-A-6 279 556 de disposer plusieurs cyclones en parallèle. Un tel dispositif permet d'améliorer la perte de charge et de limiter les cas de mise en pression du moteur. Un tel dispositif ne résout cependant pas les contraintes d'agencement.

Par ailleurs, le document US-A-6 505 615 propose un dispositif de décantation comprenant un cyclone disposé en parallèle avec un clapet. En cas de forte pression du flux gazeux entrant, le clapet ouvre une seconde chambre de décantation pour éviter la saturation du cyclone. Un tel dispositif est cependant toujours soumis aux contraintes d'agencement du cyclone, c'est-à-dire d'une arrivée d'air située tangentiellement par rapport à l'axe du cyclone.

On connaît aussi le document EP-A-1 440 723 qui propose un dispositif séparateur d'huile comprenant un conteneur conique avec des entrées d'air tout autour de la périphérie basse du cône. A chaque entrée d'air, un aileron est prévu, formant un angle avec l'axe radial du cône, pour imprimer un mouvement de tourbillon au flux d'air entrant par chaque entrée. Le flux d'air remonte donc le cône en tourbillonnant pour sortir vers le haut du cône, les particules d'huile étant centrifugées contre les parois du cône et retombant par gravitation. Un tel dispositif est complexe à fabriquer car il faut prévoir un aileron à chaque entrée d'air. De plus, un tel dispositif ne s'affranchit pas des contraintes d'agencement.

Le document EP-A-1 422 389 décrit un dispositif de décantation constitué d'une hélice montée sur un rotor et logée dans un conteneur. La rotation de l'hélice face au flux d'air entrant va provoquer la coalescence des particules d'huiles contenues dans le flux gazeux. Un tel dispositif est cependant complexe car il nécessite un lien avec un moteur d'actionnement de l'hélice pour décanter les particules d'huile.

Il existe donc un besoin pour un dispositif séparateur d'huile qui s'affranchisse des contraintes d'agencement par rapport à des axes verticaux ou horizontaux.

Il existe également un besoin pour un dispositif séparateur d'huile qui permette une décantation efficace sans perte de charge.

A cet effet, l'invention propose un dispositif séparateur d'huile, comprenant :
- une entrée de flux gazeux ;
- un conteneur présentant au moins une paroi contre laquelle des particules d'huile contenues dans le flux gazeux entrant sont adaptées à être centrifugées ;
- une sortie de flux gazeux purifié des particules d'huile ;
- au moins une hélice disposée entre l'entrée et la sortie de flux gazeux, l'hélice étant fixe en rotation par rapport au conteneur.

Selon les modes de réalisation, le dispositif séparateur d'huile selon l'invention comprend une ou plusieurs des caractéristiques suivantes :
- un clapet disposé parallèlement à l'hélice entre l'entrée et la sortie du flux gazeux ;
- une pluralité d'hélices disposées en parallèle entre l'entrée et la sortie du flux gazeux ;
- au moins deux hélices disposées en série entre l'entrée et la sortie du flux gazeux ;
- les hélices disposées en série présentent une section traversante décroissante entre l'entrée et la sortie du flux gazeux ;
- un clapet entre deux hélices disposées en série ;
- chaque hélice comprend entre 2 et 20 pales ;
- chaque pale d'une hélice présente une surface lisse ; ou microporeuse ;
- au moins une pale d'une hélice est orientée vers la paroi du conteneur ;
- chaque hélice comprend un moyeu central coaxial avec au moins une portion du conteneur ;
- un clapet est disposé sur le moyeu de l'hélice ;
- le moyeu central présente une forme en obus présentant une surface convexe au flux gazeux entrant ;
- le moyeu central présente une forme de plaque présentant une surface plane au flux gazeux entrant ;
- le moyeu central est fabriqué de manière à canaliser le flux gazeux entrant sur au moins une pale de l'hélice ;
- la sortie de flux gazeux est située sur le moyeu de l'hélice ;
- le conteneur présente au moins une portion de forme cylindrique et/ou au moins une portion de forme conique ;
- le conteneur comprend une gorge adaptée à la collecte des particules d'huiles centrifugées sur la paroi ;
- l'hélice est monobloc avec le conteneur ; par exemple le conteneur et l'hélice sont en plastique moulé ;
- l'hélice est mobile en translation à l'intérieur du conteneur ;
- l'hélice est montée sur ressort, le flux gazeux entrant étant adapté à contraindre le ressort pour actionner l'hélice en translation à l'intérieur du conteneur ;
- le conteneur présente un diamètre évolutif sur la course de translation de l'hélice ;
- les pales d'une hélice sont souples de manière à définir des fenêtres de tailles variables en fonction du débit du flux gazeux entrant ;
- les pales d'une hélice sont mobiles autour d'un axe radial.

L'invention concerne un système de décantation d'huile pour moteur à combustion interne comprenant au moins un dispositif séparateur d'huile selon l'invention disposé entre un carter moteur et une admission d'une chambre de combustion du moteur.

L'invention s'applique à un véhicule automobile comprenant un système de décantation d'huile selon l'invention.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, un schéma d'un dispositif séparateur d'huile selon un premier mode de réalisation l'invention ;
- figure 2, un schéma éclaté d'un conteneur et d'une hélice du dispositif de la figure 1 ;
- figure 3, une vue schématique de côté d'un dispositif séparateur d'huile selon un deuxième mode de réalisation de l'invention ;
- figure 4, une vue schématique du dispositif de la figure 3 tourné à 90°;
- figure 5, un schéma d'un dispositif séparateur d'huile selon un troisième mode de réalisation de l'invention ;
- figure 6, un schéma d'un dispositif séparateur d'huile selon un quatrième mode de réalisation de l'invention ;
- figure 7, un schéma d'un dispositif séparateur d'huile selon un cinquième mode de réalisation de l'invention ;
- figures 8a à 8c des schémas de trois modes de réalisation d'hélices d'un dispositif selon l'invention ;
- figure 9 un schéma d'un dispositif séparateur d'huile selon un sixième mode de réalisation de l'invention.

Le dispositif séparateur d'huile selon l'invention comprend une entrée de flux gazeux, tel qu'un flux d'air contenant des particules d'huile en suspension, et une sortie de flux gazeux purifié des particules d'huile. Le dispositif séparateur d'huile comprend un conteneur présentant au moins une paroi contre laquelle des particules d'huile contenues dans le flux gazeux entrant sont adaptées à être centrifugées et au moins une hélice disposée entre l'entrée et la sortie de flux gazeux. L'hélice est fixe en rotation par rapport au conteneur.

On entend par hélice, un dispositif constitué par un ensemble de pales concourantes reliée sur un moyeu central. Une hélice fixe en rotation par rapport à un conteneur présente des pales fixes par rapport à une section angulaire de la paroi intérieure du conteneur. On entend par section angulaire une portion de paroi latérale du conteneur s'étendant sur toute la hauteur du conteneur. L'hélice peut glisser le long des parois du conteneur mais ne peut pas tourner dans le conteneur.

Le flux gazeux traverse l'hélice et se trouve accéléré dans un mouvement de tourbillon qui provoque la séparation des particules d'huile du flux gazeux. En effet, le mouvement imprimé au flux gazeux par sa traversée de l'hélice va permettre de centrifuger les particules d'huile et provoquer leur coalescence contre la paroi du conteneur.

Le dispositif séparateur d'huile selon l'invention est adapté à être disposé entre un carter moteur et une admission d'une chambre de combustion du moteur.

L'invention va maintenant être décrite de manière plus détaillée en référence à différents modes de réalisation.

Dans la description qui suit, on utilise les mots vertical, horizontal, gauche, droite, haut et bas en référence à la position du conteneur du dispositif représenté sur les figures. Cette position est illustrative et ne doit pas être comprise comme limitant la position du dispositif séparateur d'huile disposé dans un système de décantation ou dans un moteur de véhicule.

De plus, on utilise l'expression « en parallèle » pour décrire un fonctionnement en dérivation en opposition à un fonctionnement en série désigné par l'expression « en série ».

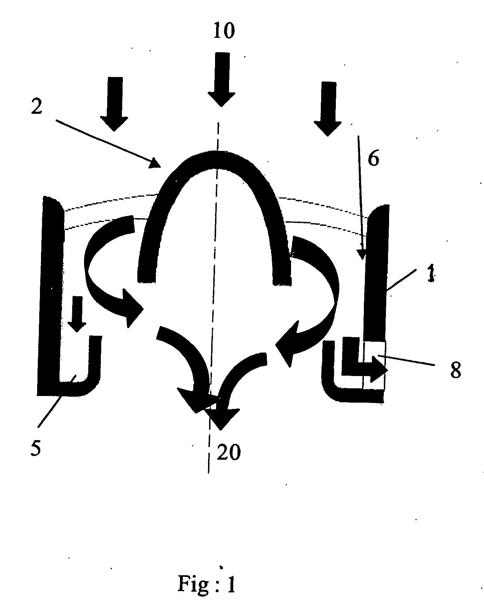

La figure 1 illustre schématiquement un dispositif séparateur d'huile selon un premier mode de réalisation de l'invention.

Le dispositif comprend un conteneur 1, présentant au moins une portion sensiblement cylindrique, et une hélice 2 logée dans le conteneur. L'hélice 2 est fixe en rotation dans le conteneur 1.

Le conteneur 1 présente une paroi intérieure 6 sur laquelle seront centrifugées les particules d'huile. La paroi intérieure 6 peut présenter toute forme et surface appropriées permettant la coalescence des particules d'huile en gouttelettes. De préférence, la paroi intérieure 6 du conteneur présente une forme arrondie, telle qu'une portion de cylindre, d'ovoïde ou de cône, mais peut également présenter une portion de section carrée ou rectangulaire. La paroi intérieure 6 peut également présenter un traitement de surface permettant aux gouttelettes d'huile de glisser plus facilement vers une gorge 5, éventuellement reliée à un orifice 8 de collecte d'huile. Des systèmes d'évacuation de l'huile peuvent également être prévus sur la paroi intérieure 6 du conteneur. Ainsi, dans un mode de réalisation particulier, la paroi intérieure du conteneur peut être poreuse. Dans un autre mode de réalisation le conteneur 1 peut être ajouré ou présenter des fenêtres pour permettre l'évacuation de l'huile

La figure 1 montre aussi une entrée de flux gazeux 10 et une sortie de flux gazeux 20. Le flux gazeux entrant 10 est chargé de particules d'huile en suspension. Lorsque le flux traverse l'hélice 2, il est accéléré à travers des fenêtres définies par les pales de l'hélice et la paroi intérieure du conteneur. Cette accélération va provoquer un effet centrifuge du flux gazeux à l'intérieur du conteneur 1 et provoquer la coalescence des particules d'huile sur la paroi intérieure 6 du conteneur.

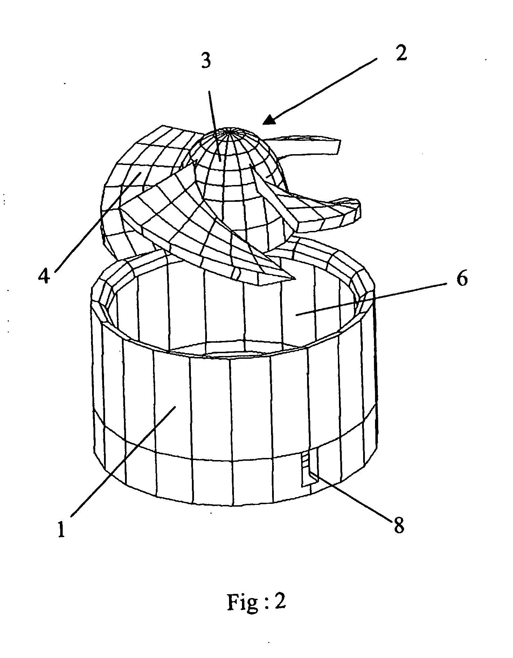

La figure 2 montre une vue éclatée du conteneur 1 et de l'hélice 2 du dispositif selon l'invention. L'hélice 2 présente un moyeu central 3 et des pales 4. Selon les modes de réalisation, l'hélice 2 peut présenter de 2 à 20 pales, de préférence entre 4 et 8 pales. Les figures annexées montrent en général 4 pales, sans que cela limite les réalisations de l'invention. Des fenêtres sont ainsi définies entre les pales 4 et la paroi intérieure 6 du conteneur pour le passage du flux gazeux. La géométrie des fenêtres sera dictée par le nombre, la forme et l'inclinaison des pales. La forme des fenêtres doit être aérodynamique et permettre une accélération optimale du flux gazeux à travers l'hélice 2. Les fenêtres constituent des ouvertures comprises entre 2 et 100 mm², de préférence de l'ordre de 15 mm².

Le moyeu central 3 de l'hélice est de préférence coaxial avec la portion de conteneur 1 dans laquelle l'hélice est disposée afin d'assurer une répartition sensiblement uniforme de la coalescence des particules d'huile sur la paroi intérieure 6 du conteneur 1. L'hélice 2 peut cependant être légèrement inclinée par rapport à l'axe du conteneur 1, par exemple de 5° à 10°, sans que cela nuisse au bon fonctionnement du séparateur d'huile.

Les pales 4 de l'hélice 2 sont de préférence orientées vers la paroi intérieure 6 du conteneur 1. Cette orientation des pales 4 permet de projeter le flux entrant, accéléré par la traversé de l'hélice 2, contre la paroi 6 du conteneur afin d'améliorer la coalescence des particules d'huile sur ladite paroi.

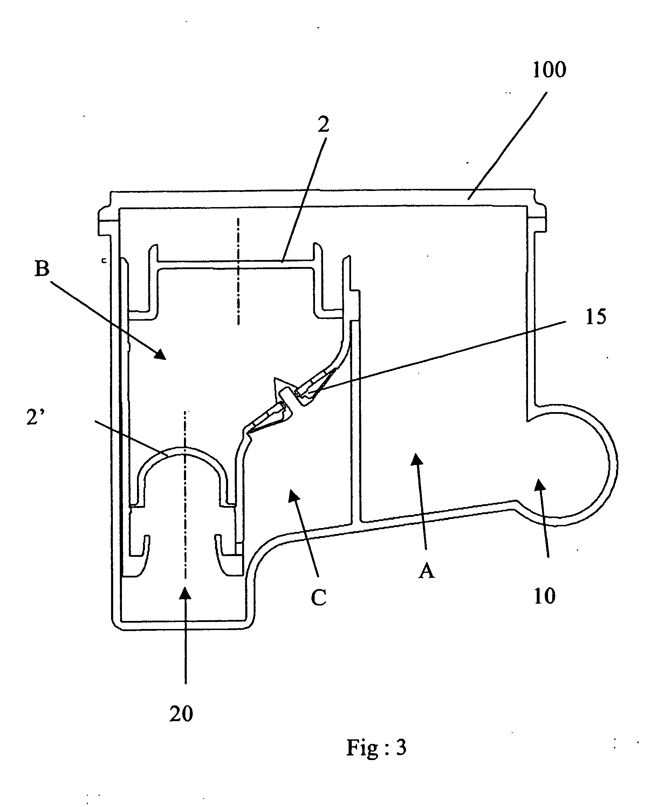

La figure 3 illustre un deuxième mode de réalisation de l'invention. La figure 3 illustre un carter 100 de système de décantation à disposer par exemple dans un moteur de véhicule automobile, avec un dispositif séparateur d'huile selon l'invention.

Une entrée de flux gazeux 10 est située en bas à droite du carter 100 dans une zone A définie comme une zone de flux gazeux chargé de particules d'huile. Une sortie de flux gazeux purifié 20, en communication avec une zone C, est reliée à conduit latéral de sortie (non représenté sur la figure 3). Le dispositif séparateur d'huile est situé dans une zone B intermédiaire.

Le carter 100 présente donc une zone de flux huileux A, une zone de décantation B et une zone de flux purifié C. Ces zones sont séparées mais leurs disposition n'est pas soumis à des contraintes de verticalité ou d'horizontalité quelconques.

On constate en effet que l'entrée du flux gazeux 10 n'est pas obligatoirement tangente ou coaxiale à l'hélice 2 car l'effet de décantation d'huile est obtenu en traversant l'hélice 2 et ne dépend pas de la direction d'arrivée du flux à purifier. Les contraintes d'agencement du dispositif séparateur d'huile selon l'invention sont donc minimales par rapport aux dispositifs de l'art antérieur. De même, la sortie du flux gazeux purifié 20 n'est pas forcément située au dessus du dispositif séparateur car l'effet de décantation ne dépend pas de la gravitation.

Le conduit de sortie du flux gazeux purifié 20 est de préférence éloigné de la sortie de l'hélice 2 et peut être surélevée pour laisser tomber par gravité d'éventuelles gouttes d'huile entraînées dans le flux gazeux sortant.

Dans un mode de réalisation non illustré, le conduit de sortie, en communication avec la zone C, peut être situé dans le moyeu central de l'hélice. Dans ce cas, le flux gazeux entrant 10 traverse l'hélice de haut en bas, puis le flux gazeux sortant 20 retraverse l'hélice de bas en haut par le moyeu central. Cette solution est particulièrement compacte et peut être intéressante dans certaines configurations de moteur.

Sur la figure 3, le dispositif séparateur d'huile comprend deux hélices 2, 2' disposées en série, selon une taille décroissante entre l'entrée et la sortie du flux gazeux. Les hélices en série présentent donc une section traversante décroissante entre l'entrée et la sortie du flux gazeux. En outre, un clapet de surpression 15 peut être disposé entre les deux hélices 2, 2', c'est à dire en série par rapport à l'hélice 2 de plus grande section traversante, dite « grande hélice ». Un tel mode de réalisation permet de gérer les variations de débit du flux entrant. En effet, le débit de gaz « blow by » varie en fonction de la charge du moteur.

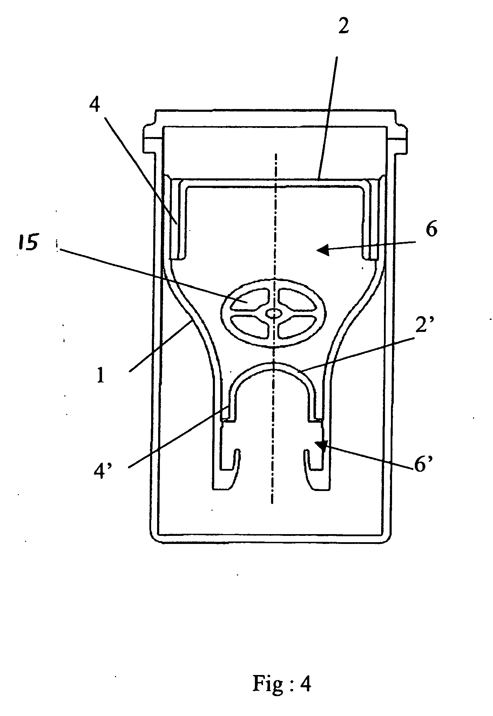

La figure 4 illustre de manière plus détaillée les deux hélices 2, 2' et le clapet 15 en série par rapport à la grande hélice 2. Lorsque le débit du flux gazeux est important, la grande hélice 2 assure une bonne séparation des particules d'huile centrifugées sur la paroi 6 du conteneur 1. En effet, lorsque le débit est important, le flux d'air est fortement accéléré à travers les pales 4 de l'hélice, même si les fenêtres entre les pales 4 sont grandes. En revanche, lorsque le débit du flux gazeux entrant est faible, le flux traversera la grande hélice 2 quasiment sans être accéléré. Aucune force centrifuge ne sera créée par la traversée de la grande hélice 2 et la séparation des particules d'huile du flux d'air ne sera pas assurée correctement. Pour cela, une deuxième hélice 2', de taille inférieure à la première 2, dite « petite hélice » c'est-à-dire avec des fenêtres entre les pales 4' beaucoup plus petites que celles de la première hélice 2, est prévue en aval du flux d'air. Ainsi, malgré un débit plus faible, le flux gazeux sera accéléré à travers la petite hélice 2' et les particules d'huiles seront centrifugées sur la paroi 6' de la portion de conteneur 1 dans laquelle est disposée la petite hélice. La séparation des particules d'huile est donc assurée quel que soit le débit du flux gazeux entrant.

Un clapet 15 de surpression peut être prévu entre les deux hélices 2, 2' en série. En effet, lorsque le débit du flux gazeux entrant est très élevé, la décantation d'huile est efficacement assurée par la grande hélice 2. L'air purifié doit alors être évacué vers la sortie de flux gazeux 20. Or, lorsque le débit est très fort, le flux purifié peut avoir du mal à traverser la petite hélice 2'. Le clapet de surpression 15 peut alors s'ouvrir pour laisser passer le flux purifié dans la zone C directement vers le conduit latéral de sortie.

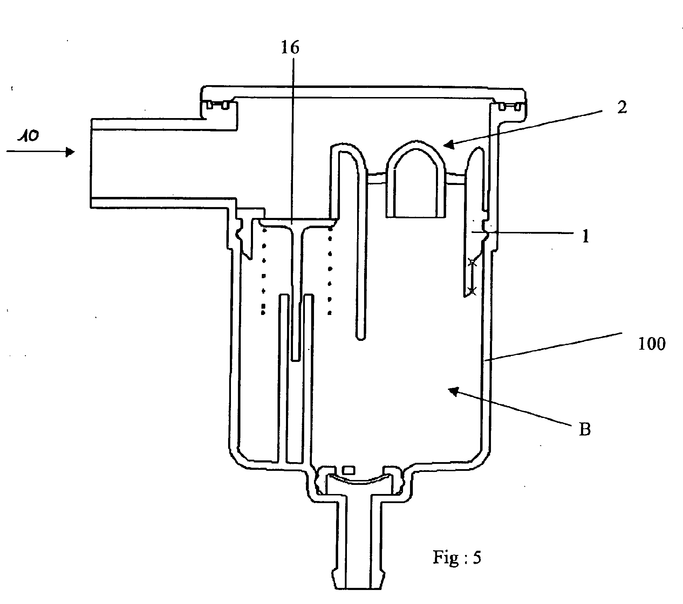

La figure 5 illustre un troisième mode de réalisation de l'invention. Le dispositif séparateur d'huile comprend une hélice 2 et un clapet de surpression 16 disposé en parallèle avec l'hélice 2. Lorsque le débit du flux gazeux est très important, l'hélice 2 peut induire une perte de charge importante et provoquer une mise en pression du moteur entraînant des fuites indésirables s'échappant du moteur. Pour éviter cela, le clapet de surpression 16 peut être ouvert pour laisser pénétrer une partie du flux gazeux entrant directement dans la zone de décantation B sans traverser l'hélice 2.

Si une seule hélice 2 est prévue, l'efficacité de séparation des particules d'huile sera donc amoindrie car une partie du flux entrant, à travers le clapet de suppression 16, ne sera pas séparé des particules d'huile. Cependant, cette portion non purifiée peut être minimisée et reste moins préjudiciable à la pollution qu'une éventuelle mise en surpression du moteur. De plus, la portion de flux gazeux non séparé des particules d'huile peut être limitée au maximum en choisissant la force du ressort du clapet 16 de manière à ce que le clapet ne s'ouvre que lorsque le moteur a un mauvais fonctionnement.

Il est entendu que les deuxième et troisième modes de réalisation peuvent être combinés entre eux, c'est-à-dire que le dispositif séparateur d'huile selon l'invention peut comprendre une pluralité d'hélices en série avec en outre un clapet de surpression en parallèle.

Ainsi, lorsque le clapet de surpression 16 en fonctionnement parallèle à la grande hélice 2 s'ouvre parce que le débit du flux entrant est très important, ce flux pénétrant directement dans la zone de décantation B pourra quand même être séparé des particules d'huile par la petite hélice 2'. La séparation des particules d'huile peut ainsi être assurée quel que soit le débit du flux gazeux entrant.

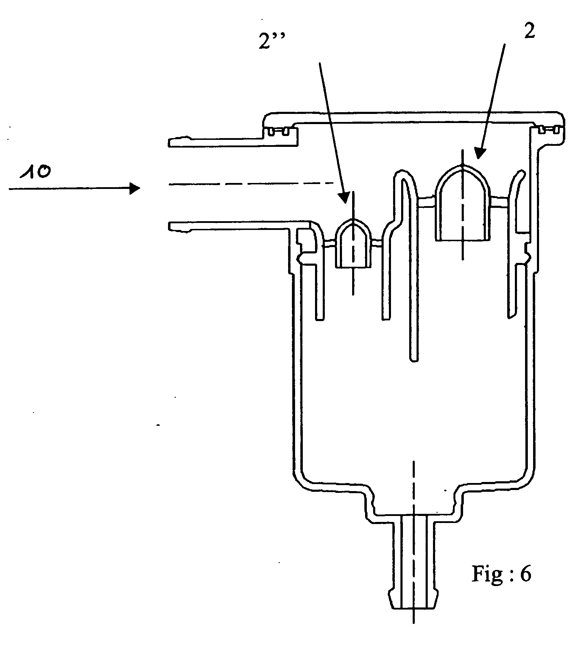

La figure 6 illustre un quatrième mode de réalisation de l'invention. Sur la figure 6, le dispositif séparateur d'huile comprend deux hélices 2, 2" disposées en parallèle. Lorsque le débit du flux gazeux est très important, le flux gazeux entrant 10 est réparti entre plusieurs hélices 2, 2". La perte de charge globale est donc minimisée.

Les hélices disposées en parallèle peuvent présenter des tailles différentes avec une répartition appropriées. Il est entendu que le quatrième mode de réalisation peut être combiné avec le deuxième et/ou le troisième mode de réalisation, c'est-à-dire que le dispositif séparateur d'huile selon l'invention peut comprendre une pluralité d'hélices en parallèle, chacune ou certaine étant en outre en série avec une hélice plus petite, un clapet de surpression pouvant en outre être prévu en parallèle.

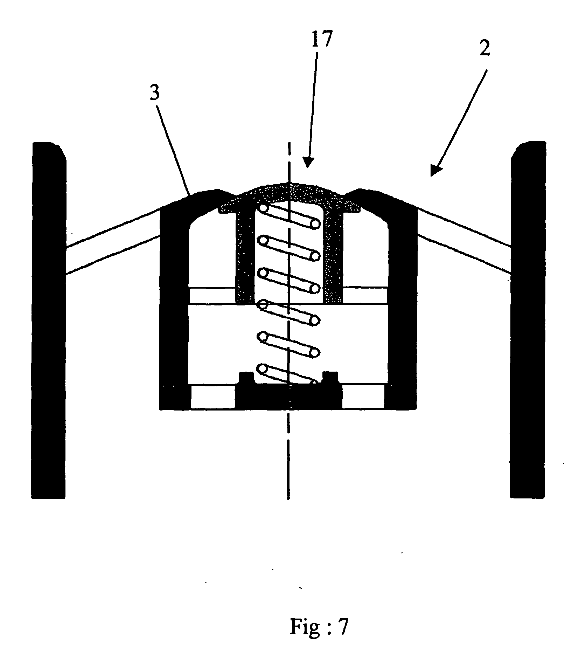

La figure 7 illustre un cinquième mode de réalisation. Ce mode de réalisation a un fonctionnement similaire à celui du troisième mode illustré sur la figure 5. Un clapet de surpression 17, disposé en parallèle de l'hélice 2, est cependant disposé sur l'hélice elle-même et non plus à côté. Le clapet de surpression 17 peut être agencé dans le moyeu central 3 de l'hélice 2. Un tel mode de réalisation peut être avantageux lorsque la place disponible pour le dispositif séparateur est limitée. Ce cinquième mode de réalisation peut bien entendu être combiné avec les deuxième et/ou quatrième modes de réalisation.

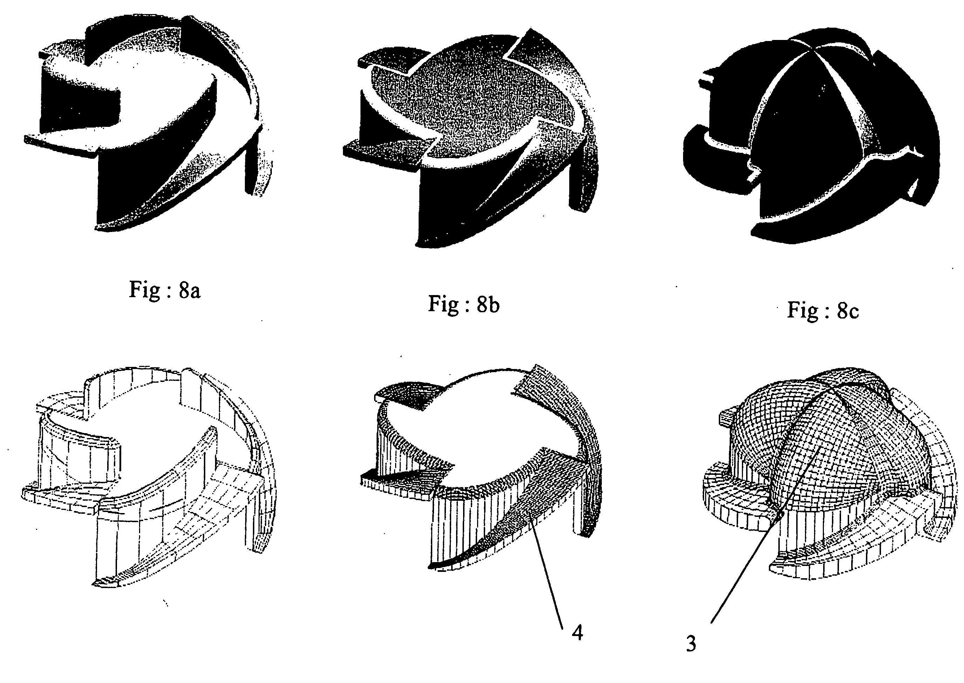

Les figures 8a à 8c illustrent différents modèles possibles d'hélices pouvant être utilisées dans un dispositif selon l'invention.

Le moyeu central 3 de l'hélice peut être conformé en forme d'obus ou de dôme (figure 8c) ou être en forme de plaque (figures 8a et 8b). Le moyeu central peut en outre être fabriqué (figures 8a et 8c), en tulipe par exemple, pour canaliser le flux d'air sur les pales et minimiser les turbulences.

Les pales 4 de l'hélice peuvent présenter une surface plane, incurvée ou torsadée. La surface des pales 4 peut être lisse, pour un meilleur écoulement de l'air à travers l'hélice, ou microporeuse, pour minimiser la perte de charge. On entend par la surface des pales la surface faisant face au flux d'air entrant. Il est entendu que le dos des pales peut présenter des caractéristiques de surface indifférentes, par exemple être rugueux.

Les pales 4 peuvent être fixées, à leur extrémité opposée au moyeu central, à la paroi interne 6 du conteneur 1. L'accélération du flux gazeux est alors proportionnelle au débit du flux entrant dans l'hélice. L'hélice 2 peut alors être constituée monobloc avec le conteneur 1, par exemple en plastique moulé ou en fonte d'aluminium ou de tout alliage métallique approprié à l'application envisagée.

L'hélice 2 peut être reportée dans le conteneur 1 sur un élément de support coaxial. Les pales 4 peuvent alors être libres à leur extrémité opposée au moyeu central 3. Les pales peuvent être souples ou être montées en rotation autour d'un axe radial, de manière à faire varier la taille des fenêtres en fonction du débit du flux gazeux entrant. Ainsi, lorsque le débit du flux gazeux entrant augmente, les pales 4 peuvent pivoter radialement ou se déformer à leur extrémité pour agrandir la taille des fenêtres de passage du flux gazeux. Les pales restent néanmoins fixes par rapport à des sections angulaires de la paroi interne du conteneur, c'est-à-dire que l'hélice 2 n'est pas entraînée en rotation dans le conteneur 1 par le flux gazeux la traversant.

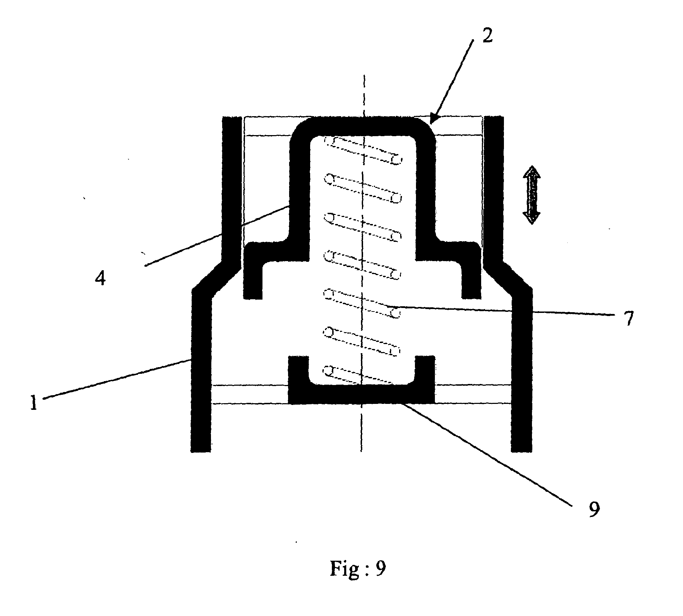

Selon un sixième mode de réalisation, illustré sur la figure 9, l'hélice 2 peut être montée en translation dans le conteneur 1. Selon ce mode de réalisation, l'hélice 2 reste quand même fixe en rotation dans le conteneur 1. Les pales 4 peuvent glisser longitudinalement le long de la paroi interne 6 du conteneur tout en restant dans la même section angulaire.

Par exemple, l'hélice 2 est montée sur un ressort 7. Le ressort 7 peut avoir une assise sur un élément de support 9 de l'hélice 2. Selon ce mode de réalisation, le flux gazeux entrant est adapté à contraindre le ressort 7 pour actionner l'hélice 2 en translation à l'intérieur du conteneur 1. Le ressort 7 est choisi de manière à ce que, lorsque le débit du flux entrant est faible, le ressort pousse l'hélice en position haute.

L'hélice 2 et le conteneur 1 sont par ailleurs conformés de façon à adapter la taille des fenêtres au débit du flux gazeux entrant. Par exemple, le conteneur 1 peut avoir un diamètre évolutif comme illustré sur la figure 9. Lorsque l'hélice est en position haute, les pales 4 de l'hélice et la paroi intérieure du conteneur 1 définissent des fenêtres de passage du flux gazeux de petite taille. Malgré un faible débit, le flux sera donc fortement accéléré à travers des fenêtres de petites tailles et les particules d'huiles seront donc efficacement centrifugées sur la paroi du conteneur 1. En revanche, lorsque l'hélice 2 est poussée par le flux entrant à l'intérieur du conteneur 1, du fait d'un débit important, les fenêtres de passage sont agrandies et le flux entrant peut être efficacement accéléré avec une perte de charge minimisée. La séparation des particules d'huile est donc assurée quel que soit le débit du flux gazeux entrant.

Il est entendu que ce sixième mode de réalisation peut être combiné avec l'un ou l'autre des modes de réalisation précédemment décrits, c'est-à-dire que le dispositif séparateur d'huile selon l'invention peut comprendre une pluralité d'hélices en parallèle et/ou en série avec un ou des clapets de surpression prévus en parallèle et/ou en série ; au moins une de ces hélices étant mobile en translation dans le conteneur.

Bien entendu, la présente invention n'est pas limitée aux modes de réalisation décrits à titre d'exemple; ainsi, les formes particulières de l'hélice et du conteneur peuvent être modifiées sans que cela nuise à la mise en oeuvre de l'invention, qui est décrite dans les revendications suivantes.

En outre, un tel dispositif peut être combiné et dupliqué dans un système de décantation de flux gazeux. En particulier, l'orientation du dispositif par rapport au flux gazeux entrant étant indifférente, de nombreux agencements différents peuvent être envisagés sans sortir du cadre de l'invention décrit dans les revendications suivantes.

## Revendications

1. Dispositif séparateur d'huile, comprenant :
- une entrée de flux gazeux (10) ;
- un conteneur (1) présentant au moins une paroi (6) contre laquelle des particules d'huile contenues dans le flux gazeux entrant sont adaptées à être centrifugées ;
- une sortie de flux gazeux (20) purifié des particules d'huile ;
- au moins une hélice (2) disposée entre l'entrée et la sortie de flux gazeux, l'hélice étant fixe en rotation par rapport au conteneur.

2. Dispositif séparateur d'huile selon la revendication 1, **caractérisé en ce qu'**il comprend en outre un clapet (16) disposé parallèlement à l'hélice (2) entre l'entrée et la sortie du flux gazeux.

3. Dispositif séparateur d'huile selon la revendication 1 ou 2, **caractérisé en ce qu'**il comprend une pluralité d'hélices (2, 2") disposées en parallèle entre l'entrée et la sortie du flux gazeux.

4. Dispositif séparateur d'huile selon l'une des revendications 1 à 3, **caractérisé en ce qu'**il comprend au moins deux hélices (2, 2') disposées en série entre l'entrée et la sortie du flux gazeux.

5. Dispositif séparateur d'huile selon la revendication 4, **caractérisé en ce que** les hélices disposées en série présentent une section traversante décroissante entre l'entrée et la sortie du flux gazeux.

6. Dispositif séparateur d'huile selon la revendication 4 ou 5, **caractérisé en ce qu'**il comprend un clapet (15) entre deux hélices disposées en série.

7. Dispositif séparateur d'huile selon l'une des revendications 1 à 6, **caractérisé en ce que** chaque hélice comprend entre 2 et 20 pales (4).

8. Dispositif séparateur d'huile selon l'une des revendications 1 à 7, **caractérisé en ce que** chaque pale d'une hélice présente une surface lisse.

9. Dispositif séparateur d'huile selon l'une des revendications 1 à 7, **caractérisé en ce que** chaque pale d'une hélice présente une surface microporeuse.

10. Dispositif séparateur d'huile selon l'une des revendications 1 à 9, **caractérisé en ce que** au moins une pale (4) d'une hélice est orientée vers la paroi (6) du conteneur (1).

11. Dispositif séparateur d'huile selon l'une des revendications 1 à 10, **caractérisé en ce que** chaque hélice (2) comprend un moyeu central (3) coaxial avec au moins une portion du conteneur (1).

12. Dispositif séparateur d'huile selon la revendication 11, **caractérisé en ce qu'**un clapet (17) est disposé sur le moyeu (3) de l'hélice.

13. Dispositif séparateur d'huile la revendication 11 ou 12, **caractérisé en ce que** le moyeu central (3) présente une forme en obus présentant une surface convexe au flux gazeux entrant (10).

14. Dispositif séparateur d'huile la revendication 11 ou 12, **caractérisé en ce que** le moyeu central (3) présente une forme de plaque présentant une surface plane au flux gazeux entrant (10).

15. Dispositif séparateur d'huile selon l'une des revendications 11 à 14, **caractérisé en ce que** le moyeu central (3) est fabriqué de manière à canaliser le flux gazeux entrant (10) sur au moins une pale (4) de l'hélice.

16. Dispositif séparateur d'huile selon l'une des revendications 11 à 15, **caractérisé en ce que** la sortie de flux gazeux (20) est située sur le moyeu (3) de l'hélice.

17. Dispositif séparateur d'huile selon l'une des revendications 1 à 16, **caractérisé en ce que** le conteneur (1) présente au moins une portion de forme cylindrique.

18. Dispositif séparateur d'huile selon l'une des revendications 1 à 17, **caractérisé en ce que** le conteneur (1) présente au moins une portion de forme conique.

19. Dispositif séparateur d'huile selon l'une des revendications 1 à 18, **caractérisé en ce que** le conteneur (1) comprend une gorge (5) adaptée à la collecte des particules d'huiles centrifugées sur la paroi (6).

20. Dispositif séparateur d'huile selon l'une des revendications 1 à 19, **caractérisé en ce que** l'hélice (2) est monobloc avec le conteneur (1).

21. Dispositif séparateur d'huile selon la revendication 20, **caractérisé en ce que** le conteneur et l'hélice sont en plastique moulé.

22. Dispositif séparateur d'huile selon l'une des revendications 1 à 19, **caractérisé en ce que** l'hélice (2) est mobile en translation à l'intérieur du conteneur (1).

23. Dispositif séparateur d'huile selon la revendication 22, **caractérisé en ce que** l'hélice (2) est montée sur ressort (7), le flux gazeux (10) entrant étant adapté à contraindre le ressort pour actionner l'hélice en translation à l'intérieur du conteneur.

24. Dispositif séparateur d'huile selon la revendication 22 ou 23, **caractérisé en ce que** le conteneur (1) présente un diamètre évolutif sur la course de translation de l'hélice (2).

25. Dispositif séparateur d'huile selon l'une des revendications 1 à 19, **caractérisé en ce que** les pales (4) d'une hélice sont souples de manière à définir des fenêtres de tailles variables en fonction du débit du flux gazeux entrant (10).

26. Dispositif séparateur d'huile selon l'une des revendications 1 à 19, **caractérisé en ce que** les pales (4) d'une hélice sont mobiles autour d'un axe radial.

27. Système de décantation d'huile pour moteur à combustion interne comprenant au moins un dispositif séparateur d'huile selon l'une des revendications 1 à 26 disposé entre un carter moteur et une admission d'une chambre de combustion du moteur.

28. Véhicule automobile comprenant un système de décantation d'huile selon la revendication 27.

## Claims

1. An oil-separating device, comprising:
an incoming gas stream (10);
a container (1) with at least one wall (6) against which oil particles contained in the incoming gas stream are arranged to be centrifuged;
an outgoing gas stream (20), purified of the oil particles;
at least one helix (2) placed between the incoming and outgoing gas streams, the helix being mounted so as not to rotate in relation to the container.

2. The oil-separating device according to claim 1, **characterised in that** it also includes a valve (16) placed in parallel with the helix (2) between the incoming and outgoing gas streams.

3. The oil-separating device according to claim 1 or 2, **characterised in that** it includes a multiplicity of helixes (2, 2") placed in parallel between the incoming and outgoing gas streams.

4. The oil-separating device according to any of claims 1 to 3, **characterised in that** it includes at least two helixes (2, 2') placed in series between the incoming and outgoing gas streams.

5. The oil-separating device according to claim 4, **characterised in that** the helixes placed in series have a decreasing cross-section between the incoming and outgoing gas streams.

6. The oil-separating device according to claim 4 or 5, **characterised in that** it includes a valve (15) between two helixes placed in series.

7. The oil-separating device according to any of claims 1 to 6, **characterised in that** each helix includes between 2 and 20 blades (4).

8. The oil-separating device according to any of claims 1 to 7, **characterised in that** each blade of a helix has a smooth surface.

9. The oil-separating device according to any of claims 1 to 7, **characterised in that** each blade of a helix has a micro-porous surface.

10. The oil-separating device according to any of claims 1 to 9, **characterised in that** at least one blade (4) of a helix is oriented toward the wall (6) of the container (1).

11. The oil-separating device according to any of claims 1 to 10, **characterised in that** each helix (2) includes a central hub (3) which is coaxial with at least one portion of the container (1).

12. The oil-separating device according to claim 11, **characterised in that** a valve (17) is placed on the hub (3) of the helix.

13. The oil-separating device according to claim 11 or 12, **characterised in that** the central hub (3) is bullet shaped with a convex surface facing the incoming gas stream (10).

14. The oil-separating device according to claim 11 or 12, **characterised in that** the central hub (3) is flat shaped with a flat surface facing the incoming gas stream (10).

15. The oil-separating device according to any of claims 11 to 14, **characterised in that** the central hub (3) is manufactured so as to channel the incoming gas stream (10) onto at least one blade (4) of the helix.

16. The oil-separating device according to any of claims 11 to 15, **characterised in that** the gas stream outlet (20) is located on the hub (3) of the helix.

17. The oil-separating device according to any of claims 1 to 16, **characterised in that** the container (1) has at least one portion that is of cylindrical shape.

18. The oil-separating device according to any of claims 1 to 17, **characterised in that** the container (1) has at least one portion that is of conical shape.

19. The oil-separating device according to any of claims 1 to 18, **characterised in that** the container (1) includes a groove (5) which is suitable for collection of the oil particles centrifuged onto the wall (6).

20. The oil-separating device according to any of claims 1 to 19, **characterised in that** the helix (2) forms a single block with the container (1).

21. The oil-separating device according to claim 20, **characterised in that** the container and the helix are moulded in plastic.

22. The oil-separating device according to any of claims 1 to 19, **characterised in that** the helix (2) is mobile in translation inside the container (1).

23. The oil-separating device according to claim 22, **characterised in that** the helix (2) is mounted on a spring (7), with the incoming gas stream (10) being designed to stress the spring in order to displace the helix in translation inside the container.

24. The oil-separating device according to claim 22 or 23, **characterised in that** the container (1) has a diameter that changes over the travel of the helix (2).

25. The oil-separating device according to any of claims 1 to 19, **characterised in that** the blades (4) of a helix are flexible so as to form windows of variable size as a function of the flow rate of the incoming gas stream (10).

26. The oil-separating device according to any of claims 1 to 19, **characterised in that** the blades (4) of a helix are mobile about a radial axis.

27. An oil-decanting system for and internal combustion engine that includes at least one oil-separating device according to any of claims 1 to 26, placed between the engine housing and an intake of a combustion chamber of the engine.

28. A motor vehicle that includes an oil-decanting system according to claim 27.

## Patentansprüche

1. Ölabscheidevorrichtung, umfassend:
- einen Einlass eines Gasstroms (10);
- einen Behälter (1), umfassend mindestens eine Wand (6), gegen welche die im eintretenden Gasstrom enthaltenen Ölpartikel zentrifugiert werden können;
- einen Auslass des von den Ölpartikeln gereinigten Gasstroms (20);
- mindestens eine Schraube (2), die zwischen dem Gasstromeinlass und -auslass angeordnet ist, wobei die Schraube relativ zum Behälter drehfest ist.

2. Ölabscheidevorrichtung nach Anspruch 1, **dadurch gekennzeichnet, dass** sie außerdem eine Klappe (16) umfasst, die parallel zur Schraube (2) zwischen dem Gasstromeinlass und -auslass angeordnet ist.

3. Ölabscheidevorrichtung nach Anspruch 1 oder 2, **dadurch gekennzeichnet, dass** sie eine Vielzahl von Schrauben (2, 2") umfasst, die parallel zwischen dem Gasstromeinlass und -auslass angeordnet sind.

4. Ölabscheidevorrichtung nach einem der Ansprüche 1 bis 3, **dadurch gekennzeichnet, dass** sie mindestens zwei Schrauben (2, 2') umfasst, die in Reihe zwischen dem Gasstromeinlass und -auslass angeordnet sind.

5. Ölabscheidevorrichtung nach Anspruch 4, **dadurch gekennzeichnet, dass** die in Reihe angeordneten Schraube einen Querschnitt aufweisen, der zwischen dem Gasstromeinlass und -auslass abnehmend ist.

6. Ölabscheidevorrichtung nach Anspruch 4 oder 5, **dadurch gekennzeichnet, dass** sie zwischen zwei in Reihe angeordneten Schrauben eine Klappe (15) aufweist.

7. Ölabscheidevorrichtung nach einem der Ansprüche 1 bis 6, **dadurch gekennzeichnet, dass** jede Schraube zwischen 2 und 20 Schraubenblätter (4) aufweist.

8. Ölabscheidevorrichtung nach einem der Ansprüche 1 bis 7, **dadurch gekennzeichnet, dass** jedes Schraubenblatt einer Schraube eine glatte Oberfläche aufweist.

9. Ölabscheidevorrichtung nach einem der Ansprüche 1 bis 7, **dadurch gekennzeichnet, dass** jedes Schraubenblatt einer Schraube eine mikroporöse Oberfläche aufweist.

10. Ölabscheidevorrichtung nach einem der Ansprüche 1 bis 9, **dadurch gekennzeichnet, dass** mindestens ein Schraubenblatt (4) einer Schraube zur Wand (6) des Behälters (1) hin orientiert ist.

11. Ölabscheidevorrichtung nach einem der Ansprüche 1 bis 10, **dadurch gekennzeichnet, dass** jede Schraube (2) eine zentrale Nabe (3) aufweist, die zu mindestens einem Abschnitt des Behälters (1) koaxial ist.

12. Ölabscheidevorrichtung nach Anspruch 11, **dadurch gekennzeichnet, dass** auf der Nabe (3) der Schraube eine Klappe (17) angeordnet ist.

13. Ölabscheidevorrichtung nach Anspruch 11 oder 12, **dadurch gekennzeichnet, dass** die zentrale Nabe (3) eine geschossartige Form aufweist, deren Fläche konvex zum eintretenden Gasstrom (10) ist.

14. Ölabscheidevorrichtung nach Anspruch 11 oder 12, **dadurch gekennzeichnet, dass** die zentrale Nabe (3) eine plattenartige Form, deren Fläche plan zum eintretenden Gasstrom (10) ist.

15. Ölabscheidevorrichtung nach einem der Ansprüche 11 bis 14, **dadurch gekennzeichnet, dass** die zentrale Nabe (3) derart aufgebaut ist, dass sie den eintretenden Gasstrom (10) auf mindestens ein Schraubenblatt (4) der Schraube kanalisiert.

16. Ölabscheidevorrichtung nach einem der Ansprüche 11 bis 15, **dadurch gekennzeichnet, dass** der Austritt des Gasstroms (20) auf der Nabe (3) der Schraube liegt.

17. Ölabscheidevorrichtung nach einem der Ansprüche 1 bis 16, **dadurch gekennzeichnet, dass** der Behälter (1) mindestens einen zylindrisch geformten Abschnitt aufweist.

18. Ölabscheidevorrichtung nach einem der Ansprüche 1 bis 17, **dadurch gekennzeichnet, dass** der Behälter (1) mindestens einen konisch geformten Abschnitt aufweist.

19. Ölabscheidevorrichtung nach einem der Ansprüche 1 bis 18, **dadurch gekennzeichnet, dass** der Behälter (1) eine Auskehlung (5) aufweist, die geeignet ist, die Ölpartikel zu sammeln, die auf der Wand (6) zentrifugiert wurden.

20. Ölabscheidevorrichtung nach einem der Ansprüche 1 bis 19, **dadurch gekennzeichnet, dass** die Schraube (2) mit dem Behälter (1) aus einem Stück ist.

21. Ölabscheidevorrichtung nach Anspruch 20, **dadurch gekennzeichnet, dass** der Behälter und die Schraube aus Pressstoff sind.

22. Ölabscheidevorrichtung nach einem der Ansprüche 1 bis 19, **dadurch gekennzeichnet, dass** die Schraube (2) im Inneren des Behälters (1) in Translation beweglich ist.

23. Ölabscheidevorrichtung nach Anspruch 22, **dadurch gekennzeichnet, dass** die Schraube (2) auf einer Feder (7) gelagert ist, wobei der eintretende Gasstrom (10) geeignet ist, die Feder zu beanspruchen, um die Schraube im Inneren des Behälters in Translation zu betätigen.

24. Ölabscheidevorrichtung nach einem der Ansprüche 22 oder 23, **dadurch gekennzeichnet, dass** der Behälter (1) einen Durchmesser aufweist, der auf dem Translationsweg der Schraube (2) fortschreitend ist.

25. Ölabscheidevorrichtung nach einem der Ansprüche 1 bis 19, **dadurch gekennzeichnet, dass** die Schraubenblätter (4) einer Schraube nachgiebig sind, um abhängig vom Durchsatz des eintretenden Gasstroms (10) Fenster variabler Größen zu definieren.

26. Ölabscheidevorrichtung nach einem der Ansprüche 1 bis 19, **dadurch gekennzeichnet, dass** die Schraubenblätter (4) einer Schraube um eine radiale Achse beweglich sind.

27. Ölabscheidesystem für eine Brennkraftmaschine, umfassend mindestens eine Ölabscheidevorrichtung nach einem der Ansprüche 1 bis 26, die zwischen einem Kurbelgehäuse und einem Einlass eines Brennraums der Brennkraftmaschine angeordnet ist.

28. Kraftfahrzeug, umfassend ein Ölabscheidesystem nach Anspruch 27.
